# EUROPÄISCHE PATENTANMELDUNG

(11) **EP 0 887 171 A1**
(43) Veröffentlichungstag der Anmeldung: **30.12.1998**
(21) Anmeldenummer: 98810221.6
(22) Anmeldetag: 17.03.1998
(51) Int. Cl.: B29C 45/77, B29C 45/76

(54) **Verfahren zur Bestimmung des Umschaltpunktes bei der Herstellung eines Spritzgussteiles**

(30) Priorität: 23.04.1997 CH 939/97
(71) Anmelder: K.K. Holding AG, 8408 Winterthur (CH)
(72) Erfinder: Bader, Christopherus, 8413 Neftenbach (CH)

(57) **Zusammenfassung**

Zur genauen Bestimmung des Umschaltpunktes bei der Herstellung eines Spritzgussteiles werden mit zwei Drucksensoren (11,12), die in Fliessrichtung (9) des einfliessenden Materials im Abstand hintereinander angeordnet sind - so dass sie vom Material zu unterschiedlichen Zeitpunkten erreicht werden - Druckverläufe (p₁, p₂) im Forminnenraum (2) aufgenommen. Aus den Druckmesswerten wird der Differenzdruck gebildet.

Beim Übergang von der volumetrischen Füllung zu einer Kompression erfahren die Drücke (p₁, p₂) im Forminnenraum einen sprunghaften Anstieg (U1, U2). Dieser schlägt sich in einem starken Absinken des gebildeten Differenzdruckes nieder, wobei sein Gradient einen Vorzeichenwechsel (V) erfährt. Dieser ist das Zeichen für das Erreichen des Umschaltpunktes, an dem die Füllphase durch die Nachdruckphase abgelöst werden muss.

## Beschreibung

Die Erfindung betrifft ein Verfahren zur Bestimmung des Umschaltpunktes bei der Herstellung eines Spritzgussteils gemäss dem Oberbegriff des Anspruchs 1.

Bei der Herstellung von Spritzgussteilen, sei es aus Kunststoff, Metall oder keramischen Werkstoffen, wird jeweils in einen Hohlraum einer Spritzgussform plastisches Material mittels einer geeigneten Einspritzeinrichtung eingespritzt, das dann durch Kühlen verfestigt oder ausgehärtet wird. Anschliessend wird die Form geöffnet und das Spritzgussteil ausgeworfen. Beim Einspritzen folgen zwei Phasen aufeinander. Während einer Füllphase wird die Form gefüllt, wobei die Einspritzeinrichtung gemäss einem Füllprogramm gewöhnlich so gesteuert wird, dass die Förderrate als Funktion der Zeit bestimmte Sollwertvorgaben erfüllt. Sobald die Form voll ist, wird die Einspritzeinrichtung während einer Nachdruckphase gewöhnlich so geregelt, dass gemäss einem Nachdruckprogramm der Druck im Hohlraum bestimmte Sollwerte erreicht, die ebenfalls zeitabhängig sein können.

Es ist von grosser Bedeutung, dass der Umschaltpunkt, d.h. der Zeitpunkt, zu dem vom Füllprogramm auf das Nachdruckprogramm umgeschaltet wird, richtig bestimmt wird und möglichst genau mit dem Zeitpunkt zusammenfällt, zu dem der Hohlraum volumetrisch, d.h. ohne Kompression, gerade vollständig gefüllt ist. Wird zu früh umgeschaltet, so besteht die Gefahr, dass der Hohlraum zu diesem Zeitpunkt nicht vollständig gefüllt ist, und ein unkontrolliertes Füllen unter Nachdruck erfolgt. Erfolgt die Umschaltung zu spät, so wird im Hohlraum ein zu hoher Druck erreicht, und es resultiert ein Spritzgussteil, das wegen innerer Spannung spröd und bruchgefährdet ist.
Es ist also entscheidend, dass die vollständige Füllung des Hohlraums möglichst exakt erkannt wird, bevor es zu einem drastischen Druckanstieg kommt. Bei einem gattungsgemässen Verfahren (DE-A-41 40 392) wird versucht, dieses Problem zu lösen, indem aus Messwerten, die bei in festen zeitlichen Abständen durchgeführten Messungen des Drucks im Hohlraum gewonnen werden, die zweite Ableitung des Drucks als Funktion der Zeit annährend bestimmt wird und, falls dieser Wert einen festen Schwellwert überschreitet, auf Erreichen des Umschaltpunktes geschlossen und auf das Nachdruckprogramm umgeschaltet wird.

Diese Lösung hat sich jedoch als nicht genügend zuverlässig erwiesen, da auch vor der vollständigen Füllung des Hohlraums der Spritzgussform beträchtliche Schwankungen des Drucks auftreten können, die bewirken, dass die zweite Ableitung den Schwellwert kurzzeitig überschreitet, was eine verfrühte Umschaltung auslöst. Dem kann im Rahmen des bekannten Verfahrens nur durch einen hohen Schwellwert entgegengewirkt werden, was jedoch die Gefahr erhöht, dass die vollständige Füllung der Form zu spät erkannt wird, und die Umschaltung nicht rechtzeitig erfolgt.

Aus der EP-A-07 07 936 ist weiterhin ein Verfahren bekannt, bei dem der Umschaltpunkt mit Hilfe der Methoden der unscharfen Logik bestimmt wird. Da die Verarbeitung der Messwerte in dem System der unscharfen Logik in zeitlich aufeinanderfolgenden Schritten erfolgt, wird auch der mit diesem Verfahren ermittelte Umschaltpunkt gegenüber dem Zeitpunkt, zu dem die Form tatsächlich volumetrisch gefüllt ist, ins Gewicht fallend verzögert angezeigt.

Aufgabe der Erfindung ist es, den zeitlich "Nachlauf" des angezeigten Umschaltpunktes gegenüber dem Zeitpunkt der volumetrischen Formfüllung weiter zu verkürzen, um so die Qualität der Spritzgussteile nochmals zu verbessern.

Diese Aufgabe wird durch die Erfindung, wie sie in den Ansprüchen gekennzeichnet ist, gelöst. Am Ende des volumetrischen Füllvorgangs erfährt der Forminnendruck bekanntlich einen sprunghaften Anstieg, der sich als "Verdichtungsfront" in wenigen Millisekunden über den ganzen, hohlen Forminnenraum ausbreitet. Misst man nun die Drücke an zwei Stellen, die vom Material und dann später von der Verdichtungsfront zu unterschiedlichen Zeiten erreicht werden, so lässt sich aus den beiden Messungen ein Differenzdruck ermitteln. Nach dem erwähnten sprunghaften Druckanstieg sinkt dieser Differenzdruck stark ab, was sich in einem abrupten Vorzeichenwechsel seines Gradienten äussert. Unterschreitet dieses Absinken einen einstellbaren Schwellenwert, so wird dies als Erreichen des Umschaltpunktes erkannt, wobei der Schwellenwert gewährleistet, dass nicht zufällige Schwankungen der Drücke und/oder ihrer Differenz fälschlich von der Anordnung als Erreichen des Umschaltpunktes interpretiert werden.

Bei dem neuen Verfahren ist die Verarbeitung der Messwerte somit auf eine einfache Differenzdruckbildung reduziert. Eine solche erfolgt sehr rasch, so dass das neue Verfahren auf ein Erreichen der volumetrischen Füllung erheblich schneller reagiert als dasjenige auf der Basis der unscharfen Logik. Darüber hinaus ist der apparative Aufwand für die Durchführung des neuen Verfahrens erheblich weniger aufwendig als derjenige für das bekannte Verfahren.

Generell eignen sich eine Vielzahl der bekannten Kraft- oder Druckmesselemente, z.B. Dehnungsmessstreifen, für die durchzuführenden Druckmessungen. Besonders bewährt haben sich jedoch piezoelektrische Kristalle; sind diese gleichnamig gepolt, so wird aus ihren Messwerten, gegebenenfalls nach einer entsprechenden Verstärkung, in bekannter Weise die Differenz gebildet, während bei ungleichnamiger Polung der Kristalle die Messwerte addiert werden.

Die Geräte für Verstärkung, Differenz- oder Summenbildung sowie das Absinken des Differenzdruckes unter den Schwellenwert und zur Steuerung der Umschaltung auf die Nachdruckphase sind bekannte Bauelemente, die im Handel erhältlich sind.

Im folgenden wird die Erfindung anhand von Figuren, welche ein Ausführungsbeispiel darstellen, näher erläutert. Es zeigen

Fig. 1 eine Spritzgussvorrichtung zur Herstellung eines Spritzgussteils, welche zur Durchführung des erfindungsgemässen Verfahrens geeignet ist.

Fig. 2 und 3, in stark schematisierter Form, Anordnungen von zwei Druckmessstellen an einem Forminnenraum.

Fig. 4 in Abhängigkeit von der Zeit als Abszisse die Druckverläufe an zwei nacheinander beaufschlagten Messstellen sowie den Verlauf des daraus gebildeten Differenzdruckes.

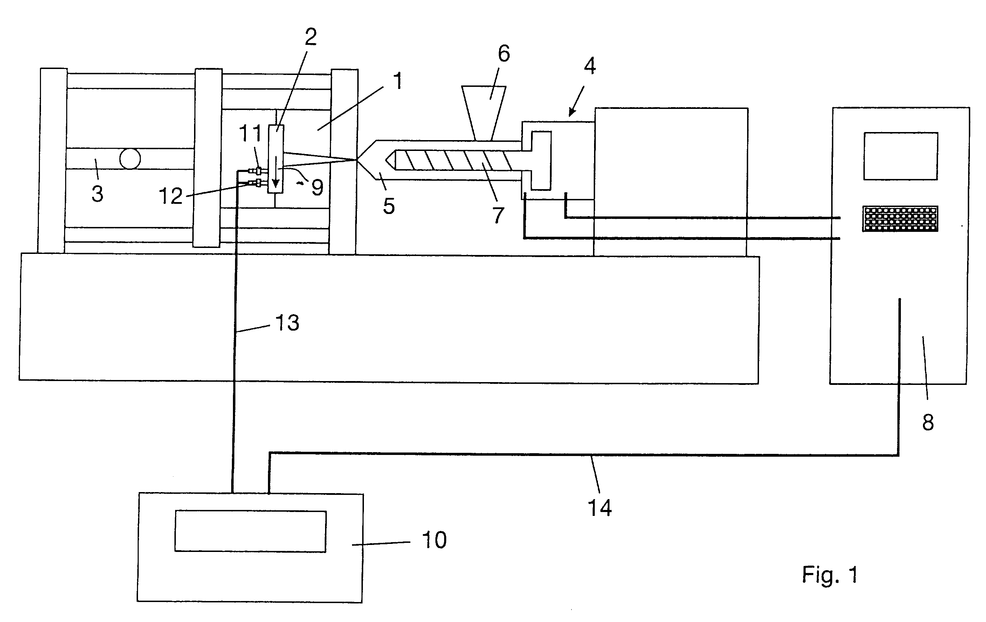

Die Spritzgussvorrichtung von Fig. 1 weist eine Form 1 aus Metall auf, welche einen hohlen Forminnenraum 2 umschliesst, in dem das Spritzgussteil geformt wird. Die Form 1 wird von einer, z.B. hydraulischen, Schliesseinheit 3 geschlossen und geöffnet. Zur Vorbereitung und zum Einspritzen von Spritzgussmasse ist eine Einspritzeinrichtung 4 vorgesehen, welche einen Spritzzylinder 5 umfasst, an dessen Oberseite ein Trichter 6 zur Einführung von Spritzgussmaterial mündet, und in welchem eine Schnecke 7 axial verschiebbar und drehbar angeordnet ist. Die Bewegungen der Schnecke 7 werden von einer Steuerung 8 bestimmt. In der Wand des Hohlraums 2 sind in der - durch einen Pfeil 9 angedeuteten - Fliessrichtung des Materials zwei Drucksensoren 11, 12 hintereinander angeordnet, welche mit einer Signalverarbeitung und -Auswertung 10 verbunden sind, die ihrerseits mit der Steuerung 8 in Verbindung steht.

Die Anlage für die Signalverarbeitung und -Auswertung 10 enthält in bekannter Weise zum Beispiel Ladungsverstärker, Subtrahier-, oder Summiereinrichtung sowie elektronische Mittel zum Vergleich der gebildeten Druckdifferenz mit einem einstellbaren Schwellenwert. Als Eingangssignale empfängt die Anlage 10 die Messwerte der Sensoren 11 und 12 über eine Signalleitung 13,während das, vorzugsweise digitale, Ausgangsignal über eine Leitung 14 der Steuerung 8 zugeführt wird, um diese zu einem Umschalten der Einspritzeinrichtung 4 auf die Nachdruckphase zu veranlassen.

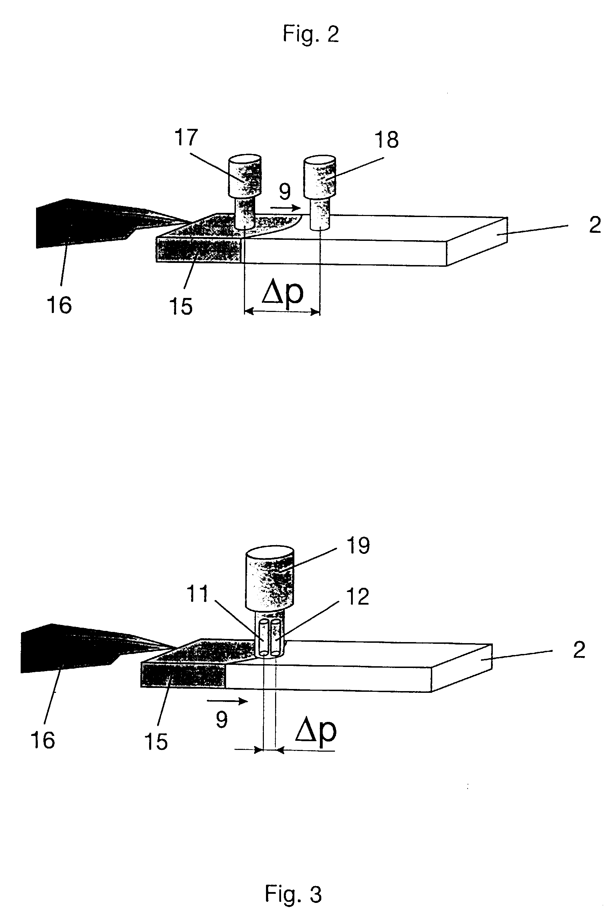

In Fig. 2 und 3 ist der Forminnenraum 2 schematisch als flacher Körper mit recheckigem Querschnitt dargestellt; er ist bereits teilweise mit Material 15 gefüllt, das vom Anguss 16 her in ihn einfliesst. An den Forminnenraum 2 sind, in Fig. 2 im Abstand hintereinander, zwei Messstellen 17 und 18 angeschlossen, die je einen in dieser Fig. nicht dargestellten Drucksensor enthalten.

Wie aus Fig. 3 zu ersehen ist, können die Sensoren 11 und 12 auch gemeinsam in einer Messstelle 19 untergebracht sein, wobei jedoch darauf zu achten ist, dass sie auch bei einer solchen Anordnung vom einfliessenden Material 15 zeitlich nacheinander beaufschlagt werden.

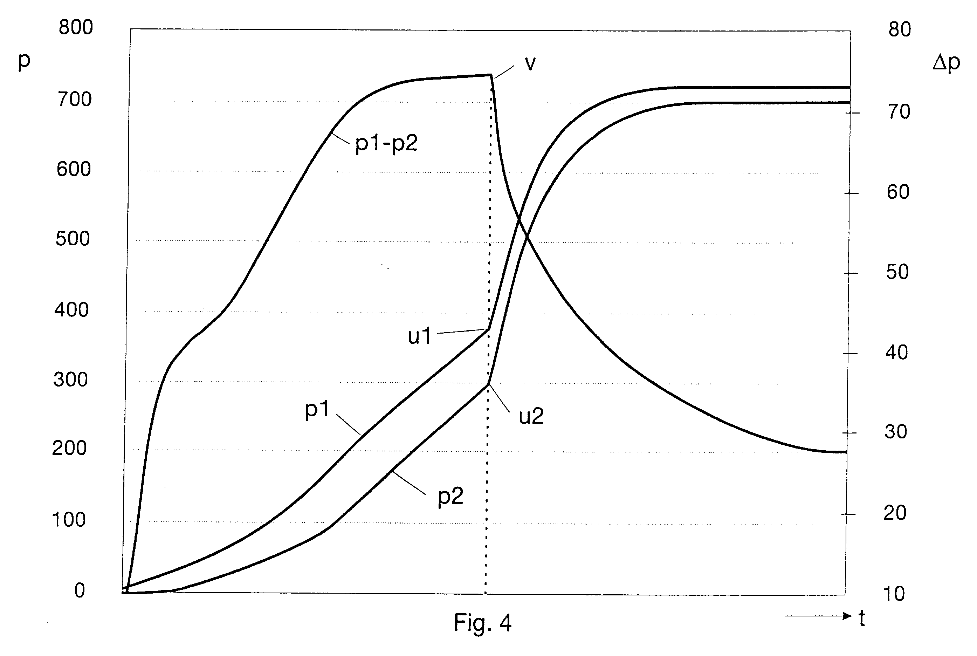

Der näher zum Anguss 16 gelegene Sensor 11 misst einen Druckverlauf p₁ (Fig. 4); mit, unter Umständen äusserst geringer, zeitlicher Verzögerung erfasst der Sensor 12 den ebenfalls in Fig. 4 aufgezeichneten Druckverlauf p₂.

In Fig. 4 sind gegen die sich etwa über einige hundert Millisekunden erstreckende Zeitachse als Ordinaten links die gemessenen Absolutdrücke in willkürlichen Einheiten und rechts die daraus gebildeten Druckdifferenzen, ebenfalls in willkürlichen Einheiten, aufgetragen.

Der Druckverlauf p₁ gibt die Messwerte des Sensors 11 wieder, während der Druckverlauf p₂ die Messungen des Sensors 12 erfasst. Fig. 4 zeigt, dass die sprunghafte Änderung U1 des Druckes p₁ praktisch gleichzeitig mit derjenigen U2 des Druckes p₂ erfolgt. Ebenfalls nur unmerklich verzögert erscheint der Knickpunkt V in der resultierenden Druckdifferenz Δp = p₁ - p₂, bei dem das Erreichen des Umschaltpunktes signalisiert wird. Von diesem Knickpunkt V wird ein Ausgangssignal der Anlage 10 ausgelöst, das einen Übergang in der Steuerung 8 für die Einrichtung 4 von der Füllphase zur Nachdruckphase bewirkt.

Vergleichsversuche haben gezeigt, dass mit dem neuen Verfahren der Umschaltpunkt schneller erfasst wird als mit der bekannten Anwendung der unscharfen Logik. Damit wird durch das neue Verfahren eine Qualitätsverbesserung für Spritzgussteile, besonders solche aus Kunststoff, erreicht.

### Referenzliste

- 1: Spritzgussform
- 2: Forminnenraum
- 3: hydraulische Schliesseinheit
- 4: Einspritzeinrichtung
- 5: Spritzzylinder
- 6: Trichter
- 7: Schnecke
- 8: Steuerung
- 9: Fliessrichtung des einfliessenden Materials
- 10: Signal
- 11: Druckmesselement
- 12: Druckmesselement
- 13: Signalleitung
- 14: Signalleitung
- 15: einfliessendes Material
- 16: Anguss
- 17: Ort der ersten Druckmessung durch Element 11
- 18: Ort der zweiten Druckmessung durch Element 12
- 19: gemeinsame Anordnung für beide Druckmesselemente
- p: Absolutdruck im Forminnenraum
- t: Zeit
- p₁: Druck gemessen von Element 11
- p₂: Druck gemessen von Element 12
- Δp: Differenzdruck p₁ - p₂
- U1: sprunghafter Druckanstieg gemessen von 11
- U2: sprunghafter Druckanstieg gemessen von 12
- V: Vorzeichenwechsel des Gradienten des Differenzdruckes

## Patentansprüche

1. Verfahren zur Bestimmung des Umschaltpunktes bei der Herstellung eines Spritzgussteils, insbesondere aus Kunststoff, bei welcher Herstellung der Hohlraum (2) einer Spritzgussform (1), mittels einer Einspritzeinrichtung (4) gemäss einem Füllprogramm bis zum Umschaltpunkt volumetrisch, d.h. ohne Kompression des Materials, mit Material (15) gefüllt und nach dem Umschaltpunkt gemäss einem Nachdruckprogramm unter einem vorgegebenen Nachdruck gehalten wird, dadurch gekennzeichnet, dass der Forminnendruck an mindestens zwei in Fliessrichtung (9) des Materials (15) mit Abstand hintereinander gelegenen Stellen (17,18) des Formhohlraums (2) gemessen wird, dass weiterhin aus den beiden Messwerten (p₁, p₂) jeweils der Differenzdruck (Δp) gebildet wird, und dass beim, durch plötzliches Absinken des Differenzdruckes (Δp) unter einen einstellbaren Schwellenwert angezeigten, Erreichen des Umschaltpunktes die Einspritzeinrichtung (4) auf das Nachdruckprogramm umgeschaltet wird,

2. Vorrichtung zur Durchführung des Verfahrens nach Anspruch 1, gekennzeichnet durch mindestens zwei voneinander unabhängige und getrennte Druckmesselemente (11,12), die im Forminnenraum (2) in Fliessrichtung (9) des Materials (15) im Abstand hintereinander angeordnet und mit einem Subtrahier- oder Addiergerät verbunden sind, an das ein Vergleichsgerät für den Vergleich des Differenz-, bzw. Summendruckes mit einem einstellbaren Schwellenwert und eine Signalausgabe für die Umschaltung auf das Nachdruckprogramm angeschlossen sind.

3. Vorrichtung nach Anspruch 2, dadurch gekennzeichnet, dass die Druckmesselemente (11,12) piezoelektrische Kristalle sind.

4. Vorrichtung nach Anspruch 2 oder 3, dadurch gekennzeichnet, dass die Druckmesselemente (11,12) in einer gemeinsamen Sensoranordnung (19) untergebracht sind.
